# EUROPEAN PATENT APPLICATION

(11) **EP 2 180 693 A1**
(43) Date of publication of application: **28.04.2010**
(21) Application number: 09163239.8
(22) Date of filing: 19.06.2009
(51) Int. Cl.: H04N 5/278, H04N 5/445, H04N 7/088

(54) **Display apparatus and control method thereof**

(30) Priority: 22.10.2008 KR 20080103625
(71) Applicant: Samsung Electronics Co., Ltd., Suwon-si, Gyeonggi-do 442-742 (KR)
(72) Inventor: Shin, Sang-won, Seoul (KR)
(74) Representative: Robinson, Ian Michael

(57) **Abstract**

Disclosed are a display apparatus and a control method thereof, which are capable of adjusting a characteristic of a caption depending on volume of sound. The display apparatus includes: a sound processing unit which processes sound; a caption processing unit which processes a caption; a display unit which displays the caption processed in the caption processing unit; and a controller which controls the caption processing unit to adjust a characteristic of the caption in correspondence to the volume of sound.

## Description

### BACKGROUND OF INVENTION

### Field of Invention

Methods and devices consistent with the present invention relate to a display apparatus and a control method thereof, and more particularly, to a display apparatus and a control method thereof, which are capable of adjusting a characteristic of a caption depending on volume of sound.

### Description of the Related Art

A caption refers to displaying information related to data broadcasting, caption information of various languages corresponding to an image being currently displayed, or the like on a screen of a display apparatus, and is generally inserted in the 21st line of an even field in a vertical blanking interval of a composite video blanking signal (CVBS) including caption data synchronized with sound. The display apparatus extracts the caption data from an input broadcasting signal or image signal, mixes the extracted caption data with an image in synchronization, and displays the mixed caption data on a certain region of the screen.

Such a caption is displayed on the display screen with a characteristic determined by the caption data or user definition. That is, the caption is displayed on the display screen with a constant size, color and form determined depending on a defined value. However, when the caption is displayed only with the determined characteristic, there is a limitation in delivering dynamic information to a user.

### SUMMARY OF THE INVENTION

According to the present invention there is provided a display apparatus and a control method as set forth in the appended claims. Other features of the invention will be apparent from the dependent claims, and the description which follows.

According to an aspect of the invention, a display apparatus includes: a sound processing unit which processes sound; a caption processing unit which processes a caption; a display unit which displays the caption processed in the caption processing unit; and a controller which controls the caption processing unit to adjust a characteristic of the caption in correspondence to a volume of sound.

The characteristic of the caption may include at least one of size, color and form of the caption.

The controller may control the caption processing unit to increase a size of the caption with increase of the volume of sound and decrease the size of the caption with decrease of the volume of sound.

The controller may control the caption processing unit to increase at least one of a color temperature and a brightness of the caption with increase of the volume of sound and decrease the color temperature or brightness of the caption with decrease of the volume of sound.

The controller may control the caption processing unit to make a form of the caption coarse with increase of the volume of sound and make the form of the caption smooth with decrease of the volume of sound.

The controller may control the caption processing unit to adjust the characteristic of the caption in correspondence to the volume of sound through sound recognition.

The controller may control the display unit to display a user input picture to allow a user to select the characteristic of the caption adjusted in correspondence to the volume of sound.

According to another aspect of the invention, a control method of a display apparatus, includes: adjusting a characteristic of a caption in correspondence to a volume of sound; and displaying the caption with the adjusted characteristic.

The characteristic of the caption may include at least one of size, color and form of the caption.

The adjusting a characteristic of a caption may include increasing a size of the caption with increase of the volume of sound and decreasing the size of the caption with decrease of the volume of sound.

The adjusting a characteristic of a caption may include increasing at least one of a color temperature and a brightness of the caption with increase of the volume of sound and decreasing the color temperature or brightness of the caption with decrease of the volume of sound.

The adjusting a characteristic of a caption may include making a form of the caption coarse with increase of the volume of sound and making the form of the caption smooth with decrease of the volume of sound.

The adjusting a characteristic of a caption may further include recognizing the sound.

The control method may further include displaying a user input picture to allow a user to select the characteristic of the caption adjusted in correspondence to the volume of sound.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a block diagram showing a configuration of a display apparatus according to an exemplary embodiment of the invention;
FIG. 2 is an exemplary view showing a screen with a caption size adjusted according an exemplary embodiment of the invention;
FIG. 3 is an exemplary view showing a screen with a caption size adjusted according another exemplary embodiment of the invention;
FIG. 4 is a flow chart showing a process of adjusting a caption size in a display apparatus according an exemplary embodiment of the invention.

### DETAILED DESCRIPTION OF EXEMPLARY EMBODIMENTS OF THE INVENTION

Reference will now be made in detail to the exemplary embodiments of the present invention, examples of which are illustrated in the accompanying drawings, so that those in the art can easily practice the present invention. The present invention is not limited to the exemplary embodiments disclosed herein but may be implemented in different forms.

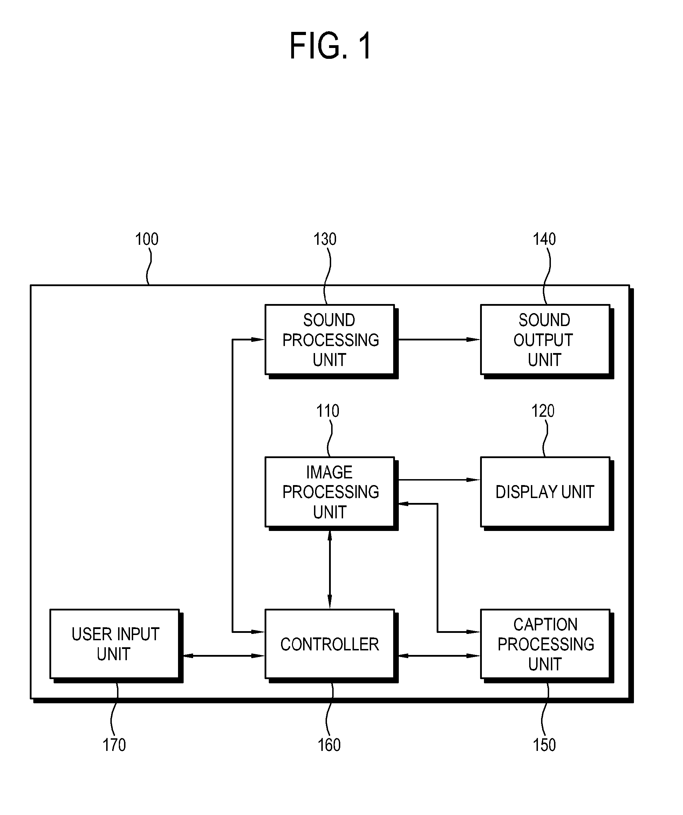

FIG. 1 is a block diagram showing a configuration of a display apparatus according to an exemplary embodiment of the invention.

As shown in FIG. 1, a display apparatus 100 according to an exemplary embodiment of the invention receives and processes images and/or sounds. According to an exemplary embodiment of the invention, the display apparatus 100 may be implemented by AV equipment, a monitor, a digital TV or the like.

Such a display apparatus 100 according to the exemplary embodiment of the invention includes an image processing unit 110 which processes a received image, a display unit 120 which displays the image processed in the image processing unit 110, a sound processing unit 130 which processes a received sound, a sound output unit 140 which outputs the sound processed in the sound processing unit 130, a caption processing unit 150 which processes a caption and displays the processed caption on the display unit 120, and a controller 160 which controls operation of the above-mentioned units as a whole, as shown in FIG. 1.

Here, the display apparatus 100 may further include a user input unit 170 which receives instructions from a user, such as menu selection and so on.

The image processing unit 110 processes the received image and displays the processes image on the display unit 120. Accordingly, the image processing unit 110 can have application of various techniques including a decoder, a scaler, image correction, etc. corresponding to various formats so that the received image can be decoded.

The display unit 120 may be implemented by a liquid crystal display (LCD), a plasma display panel (PDP), a cathode ray tube (CRT) or the like, and displays the image processed in the image processing unit 110.

The sound processing unit 130 processes the received sound and outputs the processed sound through the sound output unit 140.

The sound output unit 140 outputs the sound processed in the sound processing unit 130. The sound processing unit 140 may include a plurality of speakers (not shown) provided with a plurality of channels.

The caption processing unit 150 extracts caption data from an input composite image signal, mixes the extracted caption data with an image in synchronization, and displays the mixed caption data on a certain region of the display unit 120. The extraction of caption data and its synchronization with an image are known in the art and may be implemented in various ways, and therefore detailed explanation thereof will not be described. Here, the caption processing unit 150 adjusts characteristics of a caption, for example, size, color or form of the caption, under control of the controller 160, which will be described later, and displays the adjusted caption on the display unit 120. For example, the caption processing unit 150 makes a form of the caption coarse with increase of the volume of sound and makes the form of the caption smooth with decrease of the volume of sound.

The controller 160 controls operation of the above-described units as a whole. In particular, according to an exemplary embodiment of the invention, the controller 160 controls the caption processing unit 150 to adjust a characteristic of the caption depending on volume of the received sound.

More specifically, the controller 160 extracts a volume size from sound data received from the sound processing unit 130 and provides the extracted volume size to the caption processing unit 150. Here, the volume size may refer to information related to numerical evaluation on volume size of the sound with respect to an average of volume sizes set by a user. The volume size may be calculated by comparing particular frequency bands of the sound, or may be calculated using a known sound recognition technique.

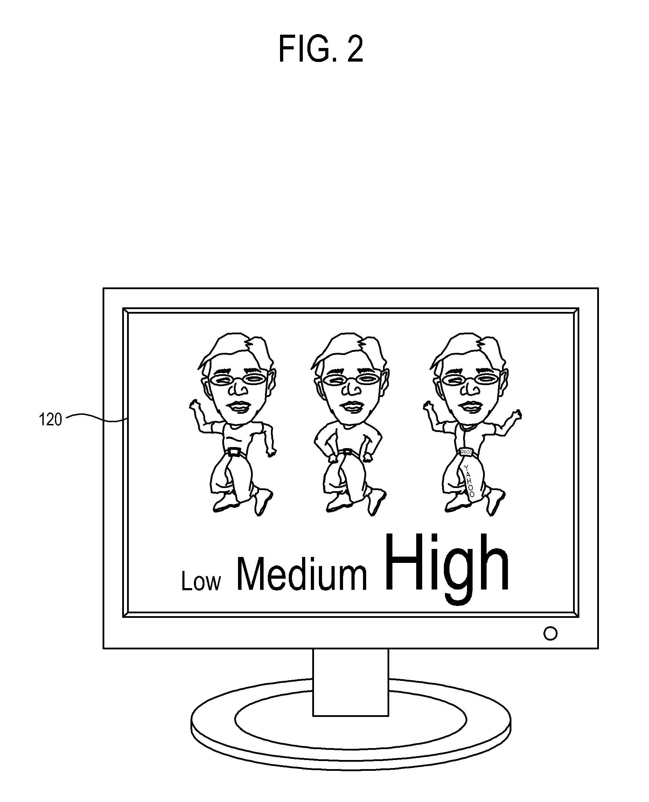

The controller 160 controls the caption processing unit 150 to adjust a characteristic of the caption displayed on the display unit 120 depending on the calculated volume size of the sound. FIG. 2 is an exemplary view showing a screen with a caption size adjusted according an exemplary embodiment of the invention. As shown in FIG. 2, the controller 160 controls the caption processing unit 150 to adjust a caption size based on the calculated volume size of the sound. In other words, the controller 160 controls the caption processing unit 150 in such a manner that the size of the caption displayed on the display unit 120 is increased in proportion to the evaluated volume size, that is, with increase of the volume size. Accordingly, a user can not only receive more dynamic information from the caption size but also determine volume of the sound currently output through the sound output unit 140 with only the caption if a mute function is set or the user is a hearing-impaired person.

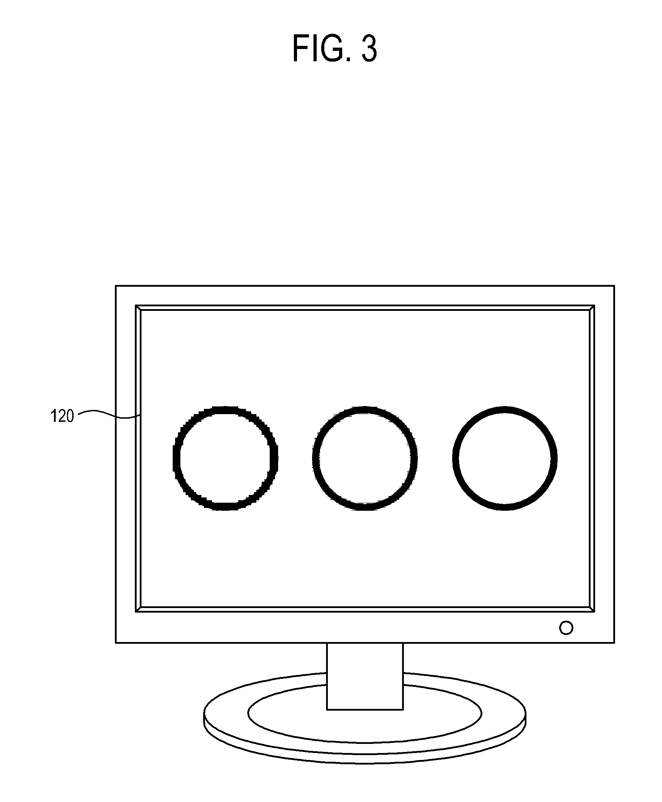

In this exemplary embodiment, it should be understood that the size, color or form of the caption may be adjusted according to the volume size of the sound. In other words, the controller 160 may control the caption processing unit 150 to increase color temperature or brightness of the caption displayed on the display unit 120, or to coarsely adjust the form of the caption in proportion to the evaluated volume size, that is, with increase of the volume size (FIG. 3).

In the meantime, the controller 160 displays a user input picture on the display unit 120 to allow a user to input a characteristic of the caption adjusted according to the volume of the sound.

The user may select an adjustment of the caption, a characteristic of the caption to be adjusted, etc. on the user input picture displayed on the display unit 120 through the user input unit 170. The user input unit 170 is provided to allow the user to select and input various functions of a broadcasting processing apparatus, including selection of a channel, selection and manipulation of a menu, etc., and includes keys or buttons (not shown) and a key signal generating unit (not shown) to generate key signals in response to manipulation of the keys or buttons. The user input unit 170 may be implemented by a remote controller, a mouse, a key board, a key pad, a touch panel or the like, or may be provided in one side of a body casing of the display apparatus.

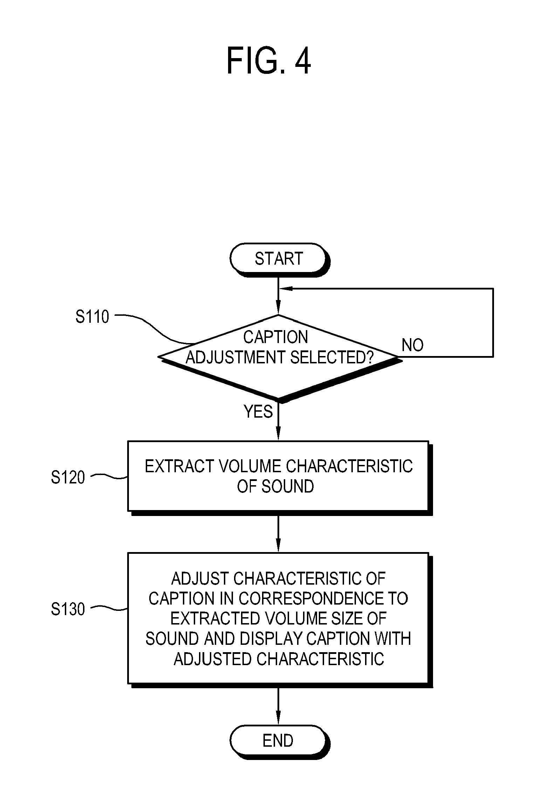

With the configuration described as above, a process of adjusting a size of the caption in the display apparatus according to the exemplary embodiment of the invention will be described with reference to FIG. 4.

As shown in FIG. 4, the controller 160 displays the user input picture on the display unit 120 to allow a user to select an adjustment of a caption and then determines whether or not an adjustment of the caption is selected (S110). If it is determined that the adjustment of the caption is selected, the controller 160 extracts a volume size from sound data received in the sound processing unit 130 and provides the extracted volume size to the caption processing unit 150 (S120). The controller 160 controls the caption processing unit 150 in such a manner that the characteristic of the caption displayed on the display unit 120 is adjusted in proportion to the calculated volume size of the sound, that is, with increase or decrease of the volume size (S130). The characteristic of the caption may be, for example, its size.

Although a few preferred embodiments have been shown and described, it will be appreciated by those skilled in the art that various changes and modifications might be made without departing from the scope of the invention, as defined in the appended claims.

## Claims

1. A display apparatus comprising:
a sound processing unit which processes sound;
a caption processing unit which processes a caption;
a display unit which displays the caption processed in the caption processing unit; and
a controller which controls the caption processing unit to adjust a characteristic of the caption in correspondence to a volume of sound.

2. The display apparatus according to claim 1, wherein the characteristic of the caption comprises at least one of size, color and form of the caption.

3. The display apparatus according to claim 1, wherein the controller controls the caption processing unit to increase a size of the caption with increase of the volume of sound and decrease the size of the caption with decrease of the volume of sound.

4. The display apparatus according to claim 1, wherein the controller controls the caption processing unit to increase at least one of a color temperature and a brightness of the caption with increase of the volume of sound and decrease the color temperature or brightness of the caption with decrease of the volume of sound.

5. The display apparatus according to claim 1, wherein the controller controls the caption processing unit to make a form of the caption coarse with increase of the volume of sound and make the form of the caption smooth with decrease of the volume of sound.

6. The display apparatus according to claim 1, wherein the controller controls the caption processing unit to adjust the characteristic of the caption in correspondence to the volume of sound through sound recognition.

7. The display apparatus according to claim 1, wherein the controller controls the display unit to display a user input picture to allow a user to select the characteristic of the caption adjusted in correspondence to the volume of sound.

8. A control method of a display apparatus, comprising:
adjusting a characteristic of a caption in correspondence to a volume of sound; and
displaying the caption with the adjusted characteristic.

9. The control method according to claim 8, wherein the characteristic of the caption comprises at least one of size, color and form of the caption.

10. The display apparatus according to claim 8, wherein the adjusting a characteristic of a caption comprises increasing a size of the caption with increase of the volume of sound and decreasing the size of the caption with decrease of the volume of sound.

11. The control method according to claim 8, wherein the adjusting a characteristic of a caption comprises increasing at least one of a color temperature and a brightness of the caption with increase of the volume of sound and decreasing the color temperature or brightness of the caption with decrease of the volume of sound.

12. The control method according to claim 8, wherein the adjusting a characteristic of a caption comprises making a form of the caption coarse with increase of the volume of sound and making the form of the caption smooth with decrease of the volume of sound.

13. The control method according to claim 8, wherein the adjusting a characteristic of a caption further comprises recognizing the sound.

14. The control method according to claim 8, further comprising displaying a user input picture to allow a user to select the characteristic of the caption adjusted in correspondence to the volume of sound.
